(19) Europäisches Patentamt
European Patent Office
Office européen des brevets

(11) Veröffentlichungsnummer: **0 319 833 B1**

(12) **EUROPÄISCHE PATENTSCHRIFT**

(45) Veröffentlichungstag der Patentschrift: **27.04.94**

(51) Int. Cl.5: **C08L 71/12**, C08L 25/04

(21) Anmeldenummer: **88119919.4**

(22) Anmeldetag: **30.11.88**

# (54) Verstärkte thermoplastische Formmassen auf Basis von Polyphenylenether.

(30) Priorität: **09.12.87 DE 3741670**

(43) Veröffentlichungstag der Anmeldung:
**14.06.89 Patentblatt 89/24**

(45) Bekanntmachung des Hinweises auf die Patenterteilung:
**27.04.94 Patentblatt 94/17**

(84) Benannte Vertragsstaaten:
**BE DE FR GB IT NL**

(56) Entgegenhaltungen:
**EP-A- 0 176 896**
**DE-A- 3 346 302**
**FR-A- 2 582 659**
**GB-A- 2 081 720**

**PATENT ABSTRACTS OF JAPAN vol. 12, no. 84 (C-482)(2931) 17 März 1988, & JP-A-62 220539**

(73) Patentinhaber: **BASF Aktiengesellschaft**
**Carl-Bosch-Strasse 38**
**D-67063 Ludwigshafen(DE)**

(72) Erfinder: **Ostermayer, Bertram, Dr.**
**Pfaffenpfad 14**
**D-67001 Roedersheim-Gronau(DE)**
Erfinder: **Baumgartner, Ehrenfried,Dr.**
**Goethestrasse 1**
**D-6701 Roedersheim-Gronau(DE)**
Erfinder: **Bueschl, Rainer, Dr.**
**Hollandstrasse 14**
**D-6701 Roedersheim-Gronau(DE)**
Erfinder: **Brandt, Hermann, Dr.**
**Keltenstrasse 30**
**D-6707 Schifferstadt(DE)**
Erfinder: **Boehlke, Klaus, Dr.**
**Gerhart-Hauptmann-Strasse 53**
**D-6717 Hessheim(DE)**
Erfinder: **Seiler, Erhard, Dr.**
**Erpolzheimer Strasse 1**
**D-6700 Ludwigshafen(DE)**
Erfinder: **McKee, Graham Edmund, Dr.**
**Kastanienweg 8**
**D-6940 Weinheim(DE)**

**EP 0 319 833 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft verstärkte thermoplastische Formmassen, enthaltend als wesentliche Komponenten

A) 40 bis 94 Gew.-Teile einer Polymerkomponente aus

$a_1$) 10 bis 90 Gew.% Polyphenylenether und

$a_2$) 10 bis 90 Gew.%, jeweils bezogen auf A, eines durch einen Acrylatkautschuk oder durch ein gegebenenfalls hydriertes Polymerisat eines konjugierten Diens schlagzäh modifizierten Styrolpolymerisates,

B) 1 bis 20 Gew.-Teile eines Copolymerisates aus

$b_1$) 70 bis 99,9 Gew.% eines Monomeren aus der Gruppe von Styrol, α-Methylstyrol und kernalkyliertem Styrol oder einer Mischung dieser Monomeren,

$b_2$) 0,1 bis 30 Gew.% mindestens einer Verbindung aus der Gruppe von t-Butylacrylat und t-Butylmethacrylat, oder mindestens einer Verbindung aus der Gruppe der allgemeinen Formel I

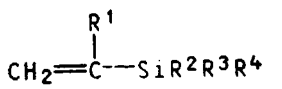 I,

wobei $R^1$ Wasserstoff oder Methyl und $R^2$, $R^3$ und $R^4$ Alkyl- oder Alkoxygruppen mit bis zu 4 C-Atomen sind, und der allgemeinen Formel II

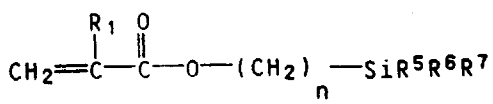 II,

wobei n eine ganze Zahl von 1 bis 4 und $R^5$, $R^6$ und $R^7$ die bei $R^2$ genannten Reste und $-O(CH_2-CH_2-O)_mR^8$ sind, wobei $R^8$ $C_1$-$C_4$-Alkyl und m 1, 2, 3 oder 4 sind, und

$b_3$) 0 bis 10 Gew.%, jeweils bezogen auf das Copolymerisat, eines weiteren mit $b_1$ und $b_2$ copolymerisierbaren ethylenisch ungesättigten Monomeren

und

C) 5 bis 50 Gew.-Teile eines Verstärkungsmittels,

wobei die Gew.-Teile auf 100 Gew.-Teile der Summe aus A, B und C bezogen sind.

Polymermischungen aus Polyphenylenethern (PPE) und Styrolpolymerisaten, die Verstärkungsmittel enthalten können, sind an sich bekannt.

So wurde in der DE-A 31 18 629 beschrieben, PPE mit schlagfest modifizierten Styrolpolymerisaten mit bestimmtem Aufbau und Siliconölen zur Verbesserung der Fließfähigkeit zu mischen. Werden diese Formmassen verstärkt, so ist jedoch die Steifigkeit noch verbesserungsbedürftig.

Aus dem US-Patent 4 242 254 waren glasfaserverstärkte Formmassen bekannt, die aufgrund der Faservorbehandlung verbesserte Flammschutzeigenschaften besitzen. Ihre Schlagzähigkeit ist jedoch unbefriedigend.

Weiterhin wurden Mischungen von PPE mit Styrol-Acrylsäureester-Copolymeren (DE-A 33 46 302) beschrieben. Außerdem sind Mischungen von PPE mit Styrol-n-Butylacrylat-Copolymeren und Polystyrol, das mit einem Ethylen/Propylenpolymerisat mit einem nicht konjugierten Dien (EPDM-Polymer) modifiziert ist, beschrieben (US-Patent 4 311 633). Werden jedoch solche Formmassen verstärkt, so sind die Schlagzähigkeit und Reißfestigkeit nicht ausreichend.

Formmassen gemäß EP-A 81 230, die Glasfasern und ein Copolymerisat aus Styrol und Maleinsäureanhydrid, Glycidylmethacrylat oder bestimmten Acrylamiden enthalten, besitzen eine ausreichende Wärmeformbeständigkeit. Verbesserungsbedürftig sind die Reißfestigkeit und die Steifigkeit, insbesondere wenn sie mit Pigmenten eingefärbt sind.

Aufgabe der vorliegenden Erfindung war es daher, verstärkte Formmassen auf Basis von Polyphenylenethern bereitzustellen, die sich durch ein ausgewogenes Niveau von mechanischen Eigenschaften wie hohe Steifigkeit und gute Reißfestigkeit sowie verbesserte Schlagzähigkeit auszeichnen, auch wenn sie Pigmente enthalten.

Demgemäß wurden die eingangs definierten Formmassen gefunden.

Außerdem werden spezielle Ausgestaltungen der Formmassen gemäß der Unteransprüche, ein Herstellungsverfahren sowie die Verwendung der Formmassen zur Herstellung von Formteilen gefunden.

Die erfindungsgemäßen Formmassen enthalten als wesentliche Komponenten 40 bis 94, bevorzugt 50 bis 88 Gew.-Teile A, 1 bis 20, bevorzugt 2 bis 10 Gew.-Teile B und 5 bis 50, bevorzugt 10 bis 48 Gew.-Teile C, wobei die Gew.-Teile auf 100 Gew.-Teile der Summe aus A, B und C bezogen sind. Bevorzugt bestehen die Formmassen aus diesen Komponenten.

Die Polymerkomponente A besteht aus 10 bis 90, bevorzugt 20 bis 80, insbesondere 30 bis 80 Gew.% Polyphenylenether $a_1$ und 10 bis 90, bevorzugt 20 bis 80, insbesondere 20 bis 70 Gew.%, jeweils bezogen auf die Komponente A, eines schlagzäh modifizierten Styrolpolymerisates $a_2$.

Die in Frage kommenden Polyphenylenether $a_1$ sind an sich bekannt, sie werden nach üblichen Verfahren aus in ortho-Position durch Alkylgruppen, Alkoxigruppen, Chlor oder Brom disubstituierten Phenolen durch oxidative Kopplung hergestellt (vgl. US-Patent 3 661 848, 3 378 505, 3 306 874, 3 306 875 und 3 639 656). Die Alkyl- oder Alkoxigruppen, die bevorzugt 1 bis 4 C-Atome, aber kein $\alpha$-ständiges tertiäres Wasserstoffatom enthalten, können ihrerseits durch Chlor oder Brom substituiert sein. Geeignete Polyphenylenether sind beispielsweise Poly-2,6-diethyl-1,4-phenylen-ether, Poly-2-methyl-6-ethyl-1,4-phenylen-ether, Poly-2-methyl-6-propyl-1,4-phenylen-ether, Poly-2,6-dipropyl-1,4-phenylen-ether, Poly-2-ethyl-6-propyl-1,4-phenylen-ether, Poly-2,6-dichlor-1,4-phenylen-ether und Poly-2,6-dibrom-1,4-phenylen-ether oder Copolymere, wie solche, die 2,3,6-Trimethylphenol enthalten, außerdem Polymermischungen. Bevorzugt ist Poly-2,6-dimethyl-1,4-phenylen-ether. Die Polyphenylenether weisen im allgemeinen eine relative Viskosität von 0,3 bis 0,7 dl/g, gemessen in 1 gew.%iger Lösung in Chloroform bei 25 °C auf.

Als $a_2$ werden an sich bekannte, von der Komponente B verschiedene Styrolpolymerisate, die in bestimmter Weise schlagzäh modifiziert sind, eingesetzt.

Als Styrolpolymerisate kommen alle üblichen Homo- und Copolymerisate des Styrols in Betracht. Üblicherweise liegen die Molekulargewichte der gebräuchlichen Styrolpolymerisate (Gewichtsmittel $M_w$) zwischen 150 000 und 300 000. Geeignete Styrolpolymerisate werden überwiegend aus Styrol, ferner aus mit $C_1$-$C_4$-Alkyl kern- oder seitenkettenalkylierten Styrolen wie $\alpha$-Methylstyrol oder p-Methyl-Styrol nach den bekannten Verfahren in Masse, Lösung oder Suspension hergestellt (vgl. Ullmanns Encyclopädie der Technischen Chemie, Band 19, Seiten 265 bis 272, Verlag Chemie, Weinheim 1980).

Die Schlagzähmodifizierung kann durch Zumischen von geringen Mengen, vorzugsweise von 2 bis 20 Gew.%, bezogen auf das Styrolpolymerisat, eines Acrylatkautschuks oder eines Polymerisates eines konjugierten Diens wie Butadien oder Isopren erreicht werden. Die Dienpolymerisate können teilweise oder vollständig hydriert sein. Der Kautschuk bzw. das Dienpolymerisat sollten eine Glastemperatur von unter 0 °C, gemessen nach K.H. Illers und H. Breuer, Kolloid Zeitschrift 176 (1961), S. 110, aufweisen. Geeignet sind übliche Kautschuke wie Polybutadienkautschuk, Acrylatkautschuk, Styrolbutadienkautschuk, hydrierter Styrolbutadienkautschuk, Acrylnitrilbutadienkautschuk, Polyisoprenkautschuk, Ionomere, Styrolbutadienblockcopolymere einschließlich AB-, ABA-, ABAB-verschmiert-(taper)Block-Copolymere, Stern-Block-Copolymere und ähnliche, analoge Isoprenblockpolymerisate, und insbesondere (teil)hydrierte Blockcopolymere, wie sie an sich aus EP-A 62 283 bekannt sind. Derartige synthetische Kautschuke sind dem Fachmann geläufig und zusammenfassend neben den nicht geeigneten EPDM-Kautschuken in "Ullmanns Encyklopädie der technischen Chemie", 4. Auflage, Band 13, Seiten 595 bis 634, Verlag Chemie GmbH, 1977, beschrieben.

Die Schlagzähmodifizierung kann in bevorzugter Weise auch dadurch bewerkstelligt werden, daß die Styrolpolymerisate in Gegenwart kleinerer Mengen, zum Beispiel 2 bis 20 Gew.% bezogen auf das Styrolpolymerisat, eines kautschukartigen Polymerisates auf Basis eines konjugierten Diens, gegebenenfalls auch eines Acrylatkautschuks, hergestellt werden (HIPS). Dabei sind kautschukartige Polymerisate auf der Basis von Butadien, z.B. Styrol-Butadien-Polymerisate, Polybutadien und ferner Butadien-Styrol-Blockcopolymerisate geeignet.

Diese in bestimmter Weise schlagzäh modifizierten Styrolpolymerisate sind dem Fachmann aus der Literatur und Praxis so geläufig, daß sich an dieser Stelle eine nähere Erläuterung erübrigt (vgl. "Ullmanns Encyklopädie der technischen Chemie", 4. Auflage, Band 19, Seiten 272 bis 295, Verlag Chemie GmbH, 1980).

Das Copolymerisat B besteht aus 70 bis 99,9, bevorzugt 80 bis 99,5 und insbesondere 85 bis 97 Gew.% $b_1$, 0,1 bis 30, bevorzugt 0,5 bis 20 und insbesondere 3 bis 15 Gew.% $b_2$ und 0 bis 10 Gew.%, jeweils bezogen auf das Copolymerisat, $b_3$. Bevorzugt fehlt $b_3$.

Als $b_1$ kann insbesondere Styrol, aber auch $\alpha$-Methylstyrol oder mit üblicherweise $C_1$-$C_4$-Alkyl am aromatischen Kern alkyliertem Styrol wie p-Methylstyrol oder eine Mischung solcher Monomerer verwendet werden.

Als $b_2$ können t-Butylacrylat und/oder t-Butylmethacrylat eingesetzt werden. Es kommt auch eine Verbindung der allgemeinen Formel I

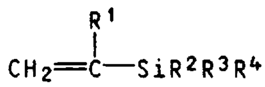 I,

wobei $R^1$ Wasserstoff oder Methyl und $R^2$, $R^3$ und $R^4$ Alkyl- oder Alkoxygruppen mit bis zu 4 C-Atomen, bevorzugt Methoxy oder Ethoxy, sind, und/oder eine Verbindung der allgemeinen Formel II

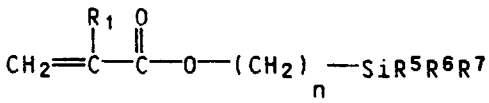 II,

wobei n eine ganze Zahl von 1 bis 4, bevorzugt 3, und $R^5$, $R^6$ und $R^7$ die bei $R^2$ genannten Reste und bevorzugt $-O(CH_2-CH_2-O)_mR^8$ sind, in Frage, wobei m 1, 2, 3 oder 4, bevorzugt 1 und $R^8$ $C_1$-$C_4$-Alkyl, bevorzugt Methyl oder Ethyl, sind. Gute Erfolge werden mit Vinyltriethoxysilan [$CH_2=CHSi(OC_2H_5)_3$], γ-Methacryloyloxypropyltrimethoxysilan [$CH_2=C(CH_3)$-$COO$-$CH_2CH_2CH_2$-$Si(OCH_3)_3$] und γ-Methacryloyloxypropyltriethoxysilan [$CH_2=C(CH_3)$-$COO$-$CH_2CH_2CH_2$-$Si(OC_2H_5)_3$], Vinyltrimethoxysilan [$CH_2=CHSi(OCH_3)_3$] und/oder γ-Methacryloyloxypropyl-tris-(2-methoxyethoxy)silan [$CH_2=C(CH_3)$-$COO$-$CH_2CH_2CH_2$-$Si(OCH_2CH_2OCH_3)_3$], erzielt. Solche Verbindungen sind im Handel erhältlich, z.B. unter dem Handelsnamen Dynasilian® der Union Carbide.

Als weitere ethylenisch ungesättigte Monomere, die mit $b_1$ und $b_2$ copolymerisierbar sind, kommen Acrylsäure, Methacrylsäure, Acrylate oder Methacrylate mit bis zu 4 C-Atomen im Alkoholrest, Maleinsäureanhydrid, (Meth)acrylamid und Maleinimid in Frage.

Das Copolymerisat B weist im allgemeinen Viskositätszahlen (VZ), bestimmt in Dimethylformamid bei 25°C nach DIN 53726, von 0,3 bis 1,5 dl/g auf.

Das Copolymerisat B kann durch Emulsionspolymerisation oder durch kontinuierliche Mischpolymerisation in Lösung oder Masse hergestellt werden.

Das t-Butyl(meth)acrylathaltige Copolymerisat wird bevorzugt in Emulsionspolymerisation hergestellt.

Die Technik der Emulsionspolymerisation ist an sich bekannt und beschrieben in

1. Ullmann's Encyklopädie der technischen Chemie, Band 19, 4. Auflage, 1980, Seite 132 - 145
2. Encyclopedia of Polymer Science and Engineering
Second Edition, Band 6, Seiten 1 - 51

Dabei werden Feststoffgehalte zwischen 5 und 75 Vol.% verwendet, vorzugsweise zwischen 10 und 65 Vol.%. Als Polymerisationsinitiatoren werden Substanzen wie Kaliumpersulfat, Natriumpersulfat, organische Peroxide und Azo-Verbindungen eingesetzt.

Als Emulgatoren können anionische, kationische und amphoterische Typen verwendet werden.

Das siliciumhaltige Copolymerisat wird bevorzugt durch kontinuierliche Mischpolymerisation hergestellt. Solche Masse- oder Lösungspolymerisationen sind allgemein bekannt aus Ullmann's Encyclopädie der technischen Chemie, Band 19, 4. Auflage, 1980, Seite 107 bis 120 oder 265 bis 268.

Bei der bekannten kontinuierlichen Mischpolymerisation wird das Copolymere B im allgemeinen bei hohen Temperaturen unter starkem Rohren hergestellt. Die Monomeren werden dazu kontinuierlich in ein Polymerisationsgefäß eingebracht und gleichzeitig wird eine diesen Mengen entsprechende Menge des Polymerisationsgemisches aus dem Gefäß abgezogen (vgl. A.W. Hanson, R.L. Zimmermann, Industrial Eng. Chemistry 49, (1957) Seite 803).

Die erfindungsgemäßen Formmassen enthalten als Komponente C übliche Verstärkungsmaterialien wie Glasfasern, Glaskugeln, Mineralfasern, Whisker, Aluminiumoxidfasern oder Glimmer. Besonders bevorzugt sind Glasfasern.

Die Glasfasern können aus E-, A- oder C-Glas sein. Sie können mit einer Schlichte aus einem Haftvermittler ausgerüstet sein. Ihr Durchmesser liegt im allgemeinen zwischen 6 und 20 µm. Es können als Komponente C sowohl strangförmige Endlosfasern (rovings) als auch Schnittglasfasern mit einer Länge von 1 bis 10 mm, vorzugsweise 3 bis 6 mm oder Kurzglasfasern mit einer Länge von 0,05 bis 1,5 mm eingesetzt werden.

Zusätzlich zu den genannten Komponenten können die erfindungsgemäßen Formmassen weitere Stoffe D wie übliche Hitze- und Lichtstabilisatoren, Gleit- und Entformungsmittel, Färbemittel, wie Farbstoffe und

Pigmente in üblichen Mengen enthalten. Ferner seien Flammschutzmittel genannt, insbesondere phosphorhaltige, wie Phosphorsäurealkylester und Phosphinoxide. Gute Flammhemmung wird mit Triphenylphosphat und Triphenylphosphinoxid erzielt. Weiterhin können den erfindungsgemäßen Formmassen andere als die genannten Polymerisate, z.B. auf vinylaromatischer Basis oder Polyamide zugesetzt werden.

Die erfindungsgemäßen Formmassen werden üblicherweise wie nachstehend beschrieben hergestellt:
Die Komponenten A, B und gegebenenfalls D werden im allgemeinen in der Schmelze bei Temperaturen zwischen 200 und 320 °C, vorzugsweise 250 und 300 °C auf Extrudern, Walzen oder Knetern bei Verweilzeiten von 0,5 bis 10 Minuten mit dem Verstärkungsmittel gemischt. Man kann aber auch Lösungen der Komponenten A, B und D oder Teilmischungen, z.B. A + B, herstellen und diese mit D vermengen, die Lösungsmittel anschließend entgasen und die Mischungen mit dem Verstärkungsmittel und dann gegebenenfalls mit den Zusatzstoffen abmischen und nochmals konfektionieren. Das Vermischen der Komponenten A, B und D erfolgt vorzugsweise in Gegenwart bzw. unter Zugabe der Verstärkungsmittel C. Es ist auch möglich, die Komponente C ganz oder teilweise mit mindestens einer anderen Komponente, z.B. $a_2$, vorzumischen.

Die erfindungsgemäße Formmasse wird bevorzugt in folgender Art hergestellt, insbesondere wenn als Komponente B ein t-Butyl(meth)acrylathaltiges Copolymerisat eingesetzt wird:
Das Copolymerisat B wird in einer wäßrigen Dispersion (hergestellt durch Emulsionspolymerisation oder durch Sekundärdispersion des fertigen Polymeren in Pulverform in Wasser mit Zuhilfenahme üblicher Emulgatoren und/oder Suspendierhilfsmittel) direkt auf den Glasfaserstrang gegeben bzw. dieser mit der Dispersion getränkt und zusammen mit den Glasfasern in eine Öffnung des Extruders in diesen eingetragen und mit der Schmelze der Komponente A vereinigt, wobei das enthaltende Wasser verdampft bzw. im Vakuum abgezogen wird.

Die erfindungsgemäße Formmassen eignet sich gut zur Herstellung von Formteilen aller Art, z.B. durch Spritzguß oder Extrusion.

Die Formmassen bzw. die daraus hergestellten Formteile weisen vorteilhafte mechanische und thermische Eigenschaften auf. Sie zeichnen sich durch hohe Steifigkeit, gute Reißfestigkeit und eine verbesserte Schlagzähigkeit. insbesondere wenn sie mit Pigmenten eingefärbt sind, aus.

Beispiel 1 bis 7 und Vergleichsversuche 1* bis 11*

Zur Ausfuhrung von Beispielen und Vergleichsversuchen wurden die folgenden Komponenten verwendet:

Komponente A

$a_1$: Poly-2,6-dimethyl-1,4-phenylenether mit einer relativen Viskosität von 0,55 dl/g, gemessen in Chloroform bei 25 °C.
$a_2$ (1): Schlagfestes Polystyrol 576 H (BASF) mit einem Gehalt von 8 Gew.% Butadien und einem Schmelzindex von 5,5 g/10 min; gemessen nach DIN 53 735 bei 200 °C und 5 kg Last.
$a_2$ (2): Schlagfestes Polystyrol 2710 der BASF AG mit einem Gehalt von 8 Gew.% Butadien und einem Schmelzindex (200 °C/5 kg) von 4 g/10 min.
$a_2$ (3): Schlagfestes Polystyrol 586 G der BASF AG mit einem Gehalt von 10 Gew.% Butadien und einem Schmelzindex (200 °C/5 kg) von 4 g/10 min.
$a_2$ (4); Polystyrol, das in Gegenwart von 8 Gew.-% eines EPDM-Polymeren aus 45 Gew.-% Ethylen, 46 Gew.% Propylen, 7 Gew.% 5-Ethyliden-2-norbornen und 2 Gew.% Dicyclopentadien gemäß US-Patent 4 311 633 hergestellt wurde.

Komponente B

B (1): Copolymerisat aus 95 Gew.% Styrol und 5 Gew.% t-Butylacrylat mit einer VZ von 1,0 dl/g
B (2): Copolymerisat aus 90 Gew.% Styrol und 10 Gew.% t-Butylacrylat mit einer VZ von 0,85 dl/g.

B (1) und B (2) wurden wie folgt hergestellt:

Destilliertes Wasser, Natrium-Salz einer $C_{12}$ - $C_{18}$ Paraffinsulfonsäure (Emulgator) und Kaliumpersulfat als Initiator wurden in einem Reaktor auf 80 °C erhitzt und mit Stickstoff gespült.

Innerhalb von vier Stunden wurden die Monomeren in den angegebenen Verhältnissen zugefahren. Zusätzlich enthielt das Monomergemisch 0,37 Gew.% Dodecylmercaptan als Regler. Zwei Stunden nach

Zulaufende wurde gekühlt.

Die Menge an Emulgator und Kaliumpersulfat war jeweils 1,2 und 0,4 Gew.% bezogen auf die Monomeren. Die Endfeststoffgehalte der Dispersionen betrugen 39 Gew.%, die pH-Werte waren 4,5.

B (3): Copolymerisat aus 96 Gew.% Styrol und 4 Gew.% Vinyltrimethoxysilan mit einer VZ von 0,85 dl/g.

B (4) Copolymerisat aus 96 Gew.% Styrol und 4 Gew.% γ-Methacryloyloxypropyltrimethoxysilan (VZ = 0,95 dl/g).

B (5) Copolymerisat aus 95 Gew.% Styrol und 5 Gew.% γ-Methacryloyloxypropyltriethoxysilan (VZ = 0,78 dl/g).

Zu Vergleichszwecken wurden folgende Copolymerisate verwendet:

B (V1) Copolymerisat aus 85 Gew.% Styrol und 15 Gew.% Maleinsäureanhydrid (VZ = 0,93 dl/g).

B (V2) Copolymerisat aus 90 Gew.% Styrol und 10 Gew.% Glycidylmethacrylat (VZ = 0,85 dl/g).

B (V3) Copolymerisat aus 92 Gew.% Styrol und 8 Gew.% n-Butylacrylat (VZ = 0,78 dl/g).

Die Copolymerisate B (3), B (4), B (5), B (V1), B (V2) und B(V3) wurden wie folgt hergestellt:

Die Monomerengemische wurden durch kontinuierliche Lösungspolymerisation unter Zusatz von 20 bis 80 Gew.-Teilen Ethylbenzol, bezogen auf 100 Gew.-Teile der Monomeren, innerhalb von 4 bis 8 Stunden Verweilzeit bei Temperaturen zwischen 120 und 180 °C und einem Druck zwischen 4 und 10 bar polymerisiert. Als Kettenübertragungsmittel dienten 0,1 bis 2,0 Gew.-Teile tert.-Dodecylmercaptan, bezogen auf 100 Gew.-Teile der Monomeren, das während der Polymerisation kontinuierlich zudosiert wurde. Die entstehenden Copolymeren wurden über einen Extruder entgast und als Granulat gewonnen.

Komponente C

C (1): Glasfaser OFC® R20 EX4 der Owens Corning Fiberglass Corp., Faserdicke 10 µm (Roving),

C (2): Vitrofil® CP 715 der Montedison GmbH, Faserdicke 16 µm, Faserlänge 4,75 mm

Zusatzstoffe

D (1): $TiO_2$, Typ FKD der Bayer AG

D (2): Triphenylphosphinoxid

Die in Tabelle 1 angegebenen Komponenten wurden mit jeweils 0,8 kg Tris(nonylphenyl)phosphit und 1,5 kg Polyethylen auf einem 2-Wellen-Extruder bei 280 °C geschmolzen, homogenisiert, gemischt und granuliert.

Die in Tabelle 2 genannten Parameter wurden an bei 280 °C spritzgegeossenen Prüfkörpern wie folgt bestimmt:

Die Schlagzähigkeit nach DIN 53 453

Die Reißfestigkeit nach DIN 53 455

Der Elastizitätsmodul nach DIN 53 457.

Tabelle 1

Zusammensetzung der Formmassen [kg]

| Beispiel | Vergleichsversuch | $a_1$ | $a_2$ Art | $a_2$ Menge | B Art | B Menge | C Art | C Menge | D Art | D Menge |
|---|---|---|---|---|---|---|---|---|---|---|
| 1 | | 35 | $a_2(1)$ | 31 | B(1) | 3 | C(1) | 28 | D(1) | 3 |
| | 1* | 35 | $a_2(1)$ | 31 | B(V1) | 3 | C(1) | 28 | D(1) | 3 |
| | 2* | 35 | $a_2(1)$ | 34 | | | C(1) | 28 | D(1) | 3 |
| 2 | | 21 | $a_2(2)$ | 44 | B(2) | 5 | C(2) | 25 | D(1) | 5 |
| | 3* | 21 | $a_2(2)$ | 44 | B(V2) | 5 | C(2) | 25 | D(1) | 5 |
| | 4* | 21 | $a_2(2)$ | 49 | | | C(2) | 25 | D(1) | 5 |
| 3 | | 51 | $a_2(1)$ | 23 | B(2) | 4 | C(2) | 20 | D(1) | 2 |
| | 5* | 51 | $a_2(1)$ | 23 | B(V1) | 4 | C(2) | 20 | D(1) | 2 |
| 4 | | 46 | $a_2(1)$ | 16 | B(1) | 4 | C(1) | 30 | D(1) | 4 |
| | 6* | 46 | $a_2(4)$ | 16 | B(V3) | 4 | C(1) | 30 | D(1) | 4 |
| 5 | | 26 | $a_2(3)$ | 43 | B(3) | 5 | C(1) | 22 | D(2) | 4 |
| | 7* | 26 | $a_2(3)$ | 43 | B(V1) | 5 | C(1) | 22 | D(2) | 4 |
| | 8* | 26 | $a_2(3)$ | 48 | | | C(1) | 22 | D(2) | 4 |
| 6 | | 42 | $a_2(1)$ | 31 | B(4) | 4 | C(2) | 15 | D(1) | 3 |
| | | | | | | | | | D(2) | 5 |
| | 9* | 42 | $a_2(1)$ | 31 | B(V2) | 4 | C(2) | 15 | D(1) | 3 |
| | | | | | | | | | D(2) | 5 |
| | 10* | 42 | $a_2(1)$ | 35 | | | C(2) | 15 | D(1) | 3 |
| | | | | | | | | | D(2) | 5 |
| 7 | | 28 | $a_2(1)$ | 38 | B(5) | 4 | C(2) | 28 | D(1) | 2 |
| | 11* | 28 | $a_2(1)$ | 38 | B(V2) | 4 | C(1) | 28 | D(1) | 2 |

Tabelle 2

| Eigenschaften der Formmassen | | | | |
|---|---|---|---|---|
| Beispiel | Vergleichsversuch | Schlagzähigkeit [kJ/m²] | Elastizitätsmodul [N/mm²] | Reißfestigkeit [N/mm²] |
| 1 | | 20 | 9200 | 140 |
| | 1* | 16 | 8700 | 128 |
| | 2* | 14 | 8500 | 120 |
| 2 | | 16 | 8300 | 117 |
| | 3* | 13 | 7750 | 110 |
| | 4* | 11 | 7300 | 95 |
| 3 | | 23 | 9600 | 145 |
| | 5* | 21 | 8900 | 130 |
| 4 | | 27 | 10100 | 142 |
| | 6* | 14 | 8700 | 99 |
| 5 | | 15 | 7300 | 105 |
| | 7* | 13 | 6900 | 93 |
| | 8* | 10 | 6050 | 77 |
| 6 | | 26 | 7800 | 110 |
| | 9* | 22 | 7400 | 102 |
| | 10* | 17 | 7300 | 98 |
| 7 | | 22 | 9300 | 129 |
| | 11* | 18 | 8400 | 117 |

**Patentansprüche**

**1.** Verstärkte thermoplastische Formmassen, enthaltend als wesentliche Komponenten
A) 40 bis 94 Gew.-Teile einer Polymerkomponente aus
$a_1$) 10 bis 90 Gew.% Polyphenylenether und
$a_2$) 10 bis 90 Gew.%, jeweils bezogen auf A, eines durch einen Acrylatkautschuk oder durch ein gegebenenfalls hydriertes Polymerisat eines konjugierten Diens schlagzäh modifizierten Styrolpolymerisates,
B) 1 bis 20 Gew.-Teile eines Copolymerisates aus
$b_1$) 70 bis 99,9 Gew.% eines Monomeren aus der Gruppe von Styrol, $\alpha$-Methylstyrol und kernalkyliertem Styrol oder einer Mischung dieser Monomeren,
$b_2$) 0,1 bis 30 Gew.% mindestens einer Verbindung aus der Gruppe von t-Butylacrylat und t-Butylmethacrylat oder mindestens einer Verbindung aus der Gruppe der allgemeinen Formel I

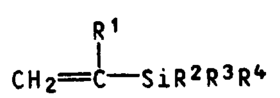 I,

wobei $R^1$ Wasserstoff oder Methyl und $R^2$, $R^3$ und $R^4$ Alkyl- oder Alkoxygruppen mit bis zu 4 C-Atomen sind, und der allgemeinen Formel II

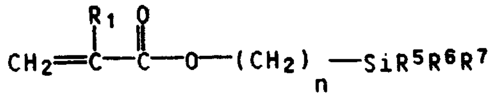 II,

wobei n eine ganze Zahl von 1 bis 4 und $R^5$, $R^6$ und $R^7$ die bei $R^2$ genannten Reste und $-O\{CH_2-CH_2-O\}_mR^8$ sind, wobei $R^8$ $C_1$-$C_4$-Alkyl und m 1, 2, 3 oder 4 sind, und

$b_3$) 0 bis 10 Gew.%, jeweils bezogen auf das Copolymerisat, eines weiteren mit $b_1$ und $b_2$ copolymerisierbaren ethylenisch ungesättigten Monomeren

und

C) 5 bis 50 Gew.-Teile eines Verstärkungsmittels,

wobei die Gew.-Teile auf 100 Gew.-Teile der Summe aus A, B und C bezogen sind.

2. Thermoplastische Formmassen nach Anspruch 1, enthaltend als wesentliche Komponenten
50 bis 88 Gew.-Teile A,
2 bis 10 Gew.-Teile B und
10 bis 48 Gew.-Teile C.

3. Thermoplastische Formmassen nach den Ansprüchen 1 bis 2, dadurch gekennzeichnet, daß $b_2$ t-Butylacrylat oder t-Butylmethacrylat oder deren Gemisch ist.

4. Thermoplastische Formmassen nach den Ansprüchen 1 bis 2, dadurch gekennzeichnet, daß $b_2$ eine Verbindung der allgemeinen Formel I oder der allgemeinen Formel II oder deren Gemisch ist.

5. Thermoplastische Formmassen nach Anspruch 4, dadurch gekennzeichnet, daß $b_2$ Vinyltrimethoxysilan oder $\gamma$-Methacryloyloxypropyl-tris-(2-methoxyethoxy)-silan oder deren Gemisch ist.

6. Verfahren zur Herstellung von thermoplastischen Formmassen nach den Ansprüchen 1 bis 5 durch Mischen der Komponenten A, B und C bei 200 bis 320 °C in einem Extruder, dadurch gekennzeichnet, daß man strangförmige Glasfasern C mit einer wäßrigen Dispersion von B tränkt, in eine Öffnung eines Extruders einführt und in dem Extruder mit der geschmolzenen Komponente A vermischt, während man das Wasser der Dispersion von B entfernt.

7. Verwendung von verstärkten thermoplastischen Formmassen nach den Ansprüchen 1 bis 6 zur Herstellung von Formteilen.

## Claims

1. A reinforced thermoplastic molding material containing, as essential components,

A) from 40 to 94 parts by weight of polymer component of

$a_1$) from 10 to 94% by weight of polyphenylene ether and

$a_2$) from 10 to 90% by weight, based in each case on A, of a styrene polymer toughened with an acrylate rubber or with an unhydrogenated or hydrogenated polymer of a conjugated diene,

B) from 1 to 20 parts by weight of a copolymer of

$b_1$) from 70 to 99.9% by weight of a monomer from the group consisting of styrene, $\alpha$-methylstyrene and styrene alkylated in the nucleus or a mixture of these monomers,

$b_2$) from 0.1 to 30% by weight of one or more compounds from the group consisting of tert-butyl acrylate and tert-butyl methacrylate, or one or more compounds from the group of compounds of the general formula I

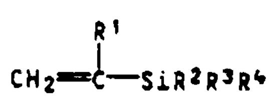

I,

where $R^1$ is hydrogen or methyl and $R^2$, $R^3$ and $R^4$ are each an alkyl or alkoxy group of not more than 4 carbon atoms, or of the general formula II

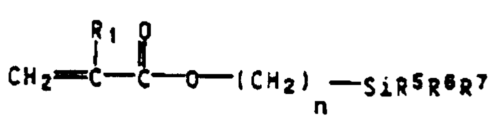

II,

where n is an integer from 1 to 4 and $R^5$, $R^6$ and $R^7$ are each one of the radicals stated for $R^2$ or are each $-O\{CH_2-CH_2-O\}_mR^8$, where $R^8$ is $C_1$-$C_4$-alkyl and m is 1, 2, 3 or 4, and

$b_3$) from 0 to 10% by weight, based on the copolymer, of a further ethylenically unsaturated monomer which is copolymerizable with $b_1$ and $b_2$,

and

C) from 5 to 50 parts by weight of a reinforcing agent, the number of parts by weight being based on 100 parts by weight of the sum of A, B and C.

**2.** A thermoplastic molding material as claimed in claim 1, containing, as essential components,
from 50 to 88 parts by weight of A,
from 2 to 10 parts by weight of B and
from 10 to 48 parts by weight of C.

**3.** A thermoplastic molding material as claimed in claim 1 or 2, wherein $b_2$ is tert-butyl acrylate or tert-butyl methacrylate or a mixture of these.

**4.** A thermoplastic molding material as claimed in claim 1 or 2, wherein $b_2$ is a compound of the general formula I or a compound of the general formula II or a mixture of these.

**5.** A thermoplastic molding material as claimed in claim 4, wherein $b_2$ is vinyltrimethoxysilane or $\gamma$-methacryloyloxypropyltris-(2-methoxyethoxy)-silane or a mixture of these.

**6.** A process for the preparation of a thermoplastic molding material as claimed in any of claims 1 to 5 by mixing the components A, B and C at from 200 to 320 °C in an extruder, wherein glass rovings C are impregnated with an aqueous dispersion of B, fed into an orifice of an extruder and mixed with the molten component A in the extruder, while the water of the dispersion of B is removed.

**7.** Use of a reinforced thermoplastic molding material as claimed in any of claims 1 to 6 for the production of moldings.

## Revendications

**1.** Masses à mouler thermoplastiques renforcées, contenant comme composants essentiels

A) 40 à 94 parties en poids d'un composant polymère de

$a_1$) 10 à 90% en poids de poly(oxyde de phénylène) et

$a_2$) 10 à 90% en poids, chaque fois par rapport à A, d'un polymère de styrène modifié dans le sens de la résilience par un caoutchouc d'acrylate ou par un polymère éventuellement hydrogéné d'un diène conjugué,

B) 1 à 20 parties en poids d'un copolymère de

$b_1$) 70 à 99,9% en poids d'un monomère du groupe du styrène, de l'$\alpha$-methylstyrène et du styrène alkylé sur le noyau ou d'un mélange de ces monomères,

$b_2$) 0,1 a 30% en poids d'au moins un composé du groupe de l'acrylate de t-butyle et du méthacrylate de t-butyle ou d'au moins un composé du groupe des composés de formule générale I

$$CH_2{=}\overset{\overset{R^1}{|}}{C}{-}SiR^2R^3R^4 \qquad I$$

où $R^1$ est un atome d'hydrogène ou un radical méthyle et $R^2$, $R^3$ et $R^4$ sont des groupements alkyle ou alcoxy comportant jusqu'à 4 atomes de carbone, et des composés de formule générale II

$$CH_2{-}\overset{\overset{R^1}{|}}{C}{-}{-}\overset{\overset{O}{\|}}{C}{-}O{-}(CH_2)_n{-}SiR^5R^6R^7 \qquad II$$

où n est un nombre entier de 1 à 4 et $R^5$, $R^6$ et $R^7$ sont les restes mentionnés à propos de $R^2$ et $-O-(CH_2-CH_2-O)_m-R^8$, $R^8$ étant un radical alkyle en $C_1$-$C_4$ et m étant mis pour 1, 2, 3 ou 4, et
$b_3$) 0 à 10% en poids, chaque fois par rapport au copolymère, d'un autre monomère à insaturation éthylénique, copolymérisable avec $b_1$ et $b_2$,

et

C) 5 à 50 parties en poids d'un agent de renforcement, les parties en poids se rapportant à 100 parties en poids de la somme de A, B et C.

**2.** Masses à mouler thermoplastiques selon la revendication 1, contenant comme composants essentiels
50 à 88 parties en poids de A,
2 à 10 parties en poids de B et
10 à 48 parties en poids de C.

**3.** Masses à mouler thermoplastiques selon la revendication 1 ou 2, caractérisées en ce que $b_2$ est de l'acrylate de t-butyle, du méthacrylate de t-butyle ou un mélange de ceux-ci.

**4.** Masses à mouler thermoplastiques selon la revendication 1 ou 2, caractérisées en ce que $b_2$ est un composé de formule générale I, un composé de formule générale II ou un melange de ceux-ci.

**5.** Masses à mouler thermoplastiques selon la revendication 4, caractérisées en ce que $b_2$ est du vinyltriméthoxysilane, du $\gamma$-méthacryloyloxypropyl-tris-(2-méthoxyéthoxy)silane ou un mélange de ceux-ci.

**6.** Procédé de préparation de masses à mouler thermoplastiques selon l'une quelconque des revendications 1 à 5 par mélange des composants A, B et C à 200-320 °C dans une extrudeuse, caractérisé en ce qu'on imprègne des stratifiés de verre C avec une dispersion aqueuse de B, on les introduit dans une ouverture d'une extrudeuse et on les mélange, dans l'extrudeuse, avec le composant A fondu, tandis qu'on chasse l'eau de la dispersion de B.

**7.** Utilisation de masses à mouler thermoplastiques renforcées selon l'une quelconque des revendications 1 à 6 pour la fabrication de pièces moulées.